**Europäisches Patentamt**

**European Patent Office**

**Office européen des brevets**

(19)

(11) Veröffentlichungsnummer : **0 361 030 B1**

(12) **EUROPÄISCHE PATENTSCHRIFT**

(45) Veröffentlichungstag der Patentschrift :
**25.03.92 Patentblatt 92/13**

(21) Anmeldenummer : **89114418.0**

(22) Anmeldetag : **04.08.89**

(51) Int. Cl.⁵ : **F16D 43/284**

(54) **Reibungskupplung.**

(30) Priorität : **22.09.88 DE 3832288**

(43) Veröffentlichungstag der Anmeldung :
**04.04.90 Patentblatt 90/14**

(45) Bekanntmachung des Hinweises auf die
Patenterteilung :
**25.03.92 Patentblatt 92/13**

(84) Benannte Vertragsstaaten :
**DE ES FR GB IT NL SE**

(56) Entgegenhaltungen :
**EP-A- 0 045 867**
**DE-C- 563 327**
**US-A- 3 862 676**
**US-A- 4 688 665**

(73) Patentinhaber : **HURTH Getriebe und**
**Zahnräder G.m.b.H.**
**Moosacher Strasse 36**
**W-8000 München 40 (DE)**

(72) Erfinder : **Meyer, Emil**
**Mooswiesenring 21**
**W-80067 Petershausen (DE)**
Erfinder : **Eichinger, Johann**
**Edelweissstrasse 15**
**W-8011 Vaterstetten (DE)**

## Beschreibung

In den letzten Jahren wurden verstärkt Überlegungen angestellt, den Kraftstoffverbrauch bei mit Verbrennungsmotoren angetriebenen Fahrzeugen weiter zu senken. Dazu gehört u.a. die Anordnung einer Abgas-Nutzturbine, die in den Abgasen noch enthaltene Energie in Leistung umsetzt, die über ein Getriebe mit einer Kupplung auf die Kurbelwelle des Verbrennungsmotors übertragen wird.

Druckmittelbetätigte Reibungskupplungen, wie sie in verschiedenen Ausführungen bekannt sind, sind für den genannten Zweck nicht brauchbar, da die Ein- und Ausschaltvorgänge in Abhängigkeit von der Turbinen- und/oder Motordrehzahl selbständig erfolgen müssen, um zusätzliche Steuerungseinrichtungen zu vermeiden. Auch sind keine mechanisch schaltbare Reibungskupplungen bekannt, die den Anforderungen des Einsatzfalles genügen.

In der DE-C 563 327 ist eine selbständig im Sinne des Einkuppelns schließende und im Sinne des Auskuppelns öffnende Reibungskupplung beschrieben, bei der in einer Ringkammer eines mit der Kurbelwelle eines Verbrennungsmotors verbundenen Zylinders ein Ringkolben angeordnet ist. In dem in Abhängigkeit von der Motordrehzahl umlaufenden Zylinder übt ein zugeführtes Fluid unter der Einwirkung der Fliehkraft einen Druck auf den Kolben aus, der die Reibkörper gegen die Kraft einer Feder zusammendrückt. Wenn die Motordrehzahl sinkt und der Druck des Fluids abnimmt, wird die Kupplung von der Feder wieder geöffnet.

Der Erfindung liegt deshalb die Aufgabe zugrunde, eine Kupplung der genannten Art so zu gestalten, daß sie den Anforderungen, die sich aus dem Einsatz einer Abgas-Nutzturbine ergeben, gerecht wird.

Die Aufgabe wird gelöst mit einer Reibungskupplung, die die Merkmale des Anspruchs 1 aufweist. Der Antrieb erfolgt von der Abgas-Nutzturbine, der Motor ist auf der Abtriebsseite der Reibungskupplung angeordnet. Außerdem sind, den Besonderheiten des Betriebes der Abgas-Nutzturbine Rechnung tragend, Einrichtungen vorgesehen zum Unterbrechen der Flüssigkeitszufuhr zur Kolben-Zylindereinheit, wenn die Abtriebsseite der Kupplung plötzlich schneller dreht als die Antriebsseite und/ oder bei Motor-Leerlauf, wenn die Nutzturbine schon oder noch Leistung bringt.

Die genannten Einrichtungen werden zweckmäßigerweise gemäß den Ansprüchen 2, 3 und 4 ausgeführt. Der Kolben ist zwar gegen ungewolltes Verdrehen gesichert, doch kann eine begrenzte relative Verdrehung zwischen dem Kolben und dem Zylinder dazu benutzt werden, die Fluidzufuhr zu unterbrechen, wenn die Drehzahl auf der Abtriebsseite höher wird als die auf der Antriebsseite der Kupplung (Anspruch 2). Damit wird eine Überlastsicherung für die Turbine bei plötzlichem Drehzahlanstieg des Motors, z.B. beim Herunterschalten im Gefälle, geschaffen. Eine vorteilhafte Weiterbildung der Kupplung wird mit dem Anspruch 3 aufgezeigt: die federnde Abdeckung der Nut läßt das in der Nut befindliche Fluid bei der Relativverdrehung zwischen Kolben und Zylinder nur langsam entweichen, wodurch ein schlagartiges Öffnen und Schließen der Kupplung vermieden wird.

Die Verwendung des Motor-Schmieröls als Fluid für die Kupplung (Anspruch 5) bringt insofern einen wesentlichen Vorteil, daß kein zusätzlicher, in sich geschlossener Fluidkreislauf für die Kupplungsbetätigung erforderlich ist. Die ohnehin vorhandene Pumpe versorst auch die Kupplung mit Öl. Da der Druck des zugeführten Motor-Schmieröls nicht konstant ist und der Zylinder nur ein begrenztes Volumen hat, in dem sich ein von der Turbinendrehzahl abhängiger Druck aufbauen soll, ist eine Entlastungsbohrung vorgesehen (Anspruch 6), über die das nicht zum Druckaufbau benötigte Fluid abgeführt wird bzw. über die ein evtl. zu hoher Druck des zugeführten Fluids abgebaut wird.

Die Turbine bei Motor-Leerlauf vom Motor abzukuppeln, auch wenn sie schon oder noch Leistung bringt, ist insbesondere bei einer plötzlichen Drehzahlverringerung sinnvoll, z.B. wenn der Fahrer des Fahrzeugs vom Kupplunpspedal abrutscht. Eine zweckmäßige Ausführung für eine Einrichtung zum Abkuppeln der Turbine vom Motor in solchen Fällen durch Unterbrechen der Fluidzufuhr wird mit dem Anspruch 4 aufgezeigt. Da eine 100%ige Abdichtung mit einfachen Mitteln nicht zu erreichen ist, ist eine weitere Entlastunssbohrung nach Anspruch 6 empfehlenswert. Da nur Lecköl abgeführt zu werden braucht und der Druckaufbau im Zylinder bei normaler Fluidzufuhr sichergestellt sein muß, soll diese Bohrung nur einen ganz geringen Querschnitt aufweisen.

Um einen einwandfreien Beginn des Schließvorganges ohne Verzögerungen zu erzielen ist die weitere Ausgestaltung der Kupplung nach Anspruch 8 zweckmäßig, wofür im Anspruch 9 eine sehr einfache Ausführung aufgezeigt wird. Zur Begrenzuns des maxi aml übertragbaren Drehmoments dient die Ausbildung der Kupplung nach Anspruch 10.

Zum Schutz der Kupplung vor vom Motor ausgehenden Schwingungen (Drehungleichförmigkeiten), die insbesondere im unteren Drehzahlbereich des Motors sehr hoch sind, ist ein Dämpfungsglied vorgesehen (Anspruch 11), das nach Anspruch 12 angeordnet werden kann. Das Dämpfungsglied (Schwingungsdämpfer) muß nicht in die Kupplung integriert sein, sondern kann auch getrennt von der Kupplung angeordnet werden, z.B. innerhalb einer Getriebestufe oder zwischen zwei Getriebestufen, die zwischen der Kupplung und der Kurbelwelle des Motors angeordnet ist bzw. sind.

Die Erfindung wird nachstehend anhand eines in vier Figuren dargestellten Ausführungsbeispiels beschrieben. Es zeigen

Fig. 1 ein Schemabild von einem Getriebe, bei dem die erfindungsgemäße Kupplung eingesetzt ist,

Fig. 2 einen Schnitt durch ein solches Getriebe mit geringfügig geändertem Aufbau,

Fig. 3 einen Teilschnitt entlang der Linie A-A in Fig. 2, und

Fig. 4 einen Teilschnitt entlang der Linie B-B in Fig. 2.

In einem Getriebegehäuse 1 sind ein Planetengetriebe 2, eine Reibungskupplung 3 (im folgenden nur als Kupplung 3 bezeichnet) und ein Schwingungsdämpfer 4 untergebracht. Der Antrieb erfolgt von einer Turbinenwelle 5 einer Abgasnutzturbine 6 auf das Sonnenrad 7 des als Standgetriebe ausgeführten Planetengetriebes 2, das über Planetenräder 8 ein Hohlrad 9 und die mit ihm verbundene Kupplung 3 in Rotation versetzt. Die Kupplung 3, auf die noch näher eingegangen wird, verbindet bzw. trennt die Turbine mit bzw. von der Kurbelwelle 15 eines Verbrennungsmotors 10. Zwischen dem Abtriebsteil der Kupplung 3 und dem Motor 10 sind zur Drehzahlanpassung Zahnräder 11, 12,13,14 angeordnet, die in einem eigenen, nicht dargestellten Gehäuse gelagert sind. Unmittelbar nach der Kupplung 3 ist ausgangsseitig der Schwingungsdämpfer 4 vorgesehen.

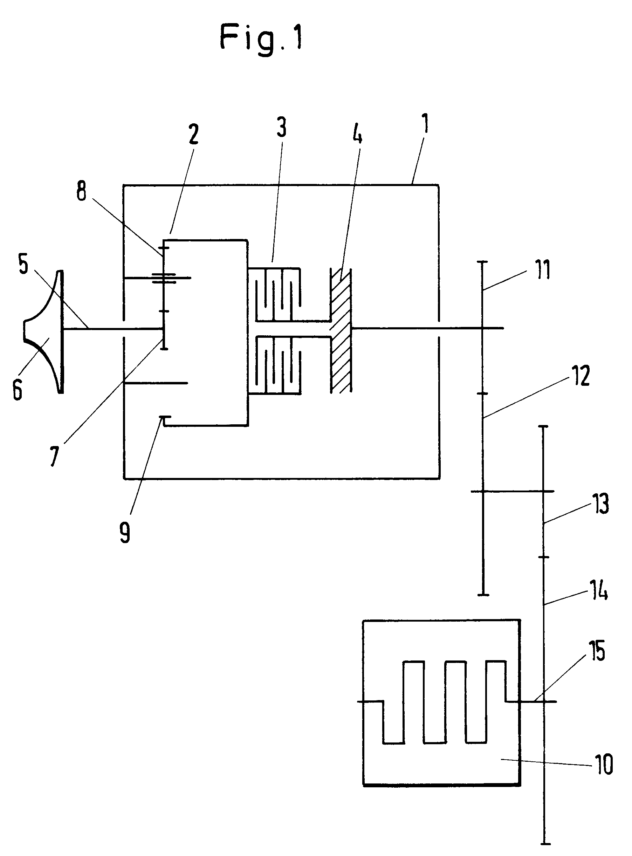

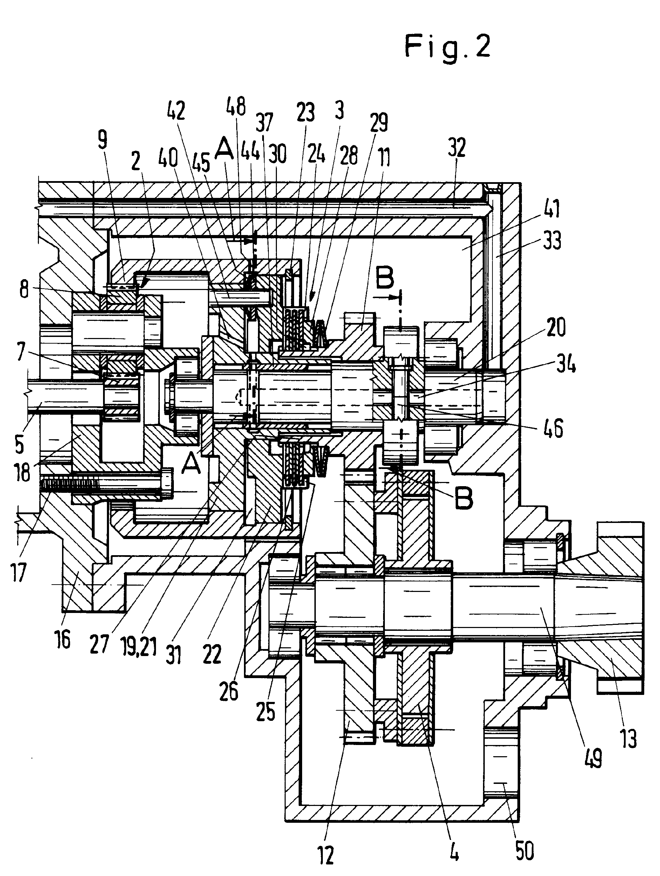

Einzelheiten der Kupplung 3 bzw. des Getriebes sind in Fig. 2 gezeigt, wo entsprechende Teile dieselben Nummern tragen wie in Fig. 1. Das Hohlrad 9 des Planetengetriebes 2 ist über einen Hohlradträger 19, mit dem es fest und druckdicht verbunden ist, auf einer Welle 20 gelagert, die im Getriebegehäuse 1 und im Planetenträger 18 gelagert ist. Der Planetenträger 18 ist aus konstruktiven Gründen am Gehäuse 16 der Abgasnutzturbine 6 angeschraubt, er könnte aber auch direkt am Getriebegehäuse 1 befestigt sein, mit dem das Gehäuse 16 mittels Schrauben 17 verbunden ist.

Das Hohlrad 9 mit dem Hohlradträger 19 bilden zusammen einen Zylinder 21, in dem ein Ringkolben 22 verschiebbar, aber druckdicht geführt ist. Die Dichtelemente brauchen, da bekannt, nicht dargestellt und beschrieben zu werden. Ein Sprengring 23 im Zylinder begrenzt den Weg, um den der Ringkolben 22 verschiebbar ist. Ein ringförmiger Ansatz am Ringkolben 22 ist mit Aussparungen 24 zur Aufnahme der Mitnehmer von sogenannten Außenlamellen 25 versehen. Letztere wirken mit sogenannten Innenlamellen 26 zusammen, die mit einer Innenverzahnung in ein entsprechendes Profil in einem hülsenförmigen Ansatz 27 des Zahnrades 11 eingreifen. Das so gebildete Lamellenpaket wird auf der dem Ringkolben 22 abgewendeten Seite von einer Druckplatte 28 abgestützt. Diese ist von Tellerfedern 29 im Sinne des Einkuppelns belastet. Dabei stützen sich die Tellerfedern 29 am Zahnrad 11 ab und drücken die Druckplatte 28 gegen einen Sprengring 30, der so angeordnet ist, daß die Lamellen von ihm bzw. von den Tellerfedern 29 nicht zusammengedrückt werden, wenn die Kupplung geöffnet ist.

Von einer externen, nicht gezeigten Pumpe wird einer vom Zylinder 21 und vom Ringkolben 22 gebildete Ringkammer 31 ständig ein Fluid zugeführt. Der Einfachheit halber handelt es sich dabei um Schmieröl vom Motor 10, das von der Schmierölpumpe des Motors über nicht gezeigte Leitungen zum Getriebegehäuse 1 gefördert wird. Im Gehäuse 1 sind dazu Bohrungen 32,33 vorgesehen durch die das Öl zu einer Bohrung 34 in der Welle 20 und von dort weiter durch radiale Bohrungen 35 in der Welle 20, 36 in einer Hülse 37 und 38 im Zylinder 21 sowie durch einen stirnseitigen Schlitz 39 im Ringkolben 22 in die Ringkammer 31 gelangt. Durch eine gezielte Schmierölzufuhr und entsprechende Dimensionierung der Kolbenfläche baut sich in der Ringkammer 31 in Abhängigkeit von der Drehzahl der Turbine durch Rotieren des mit dem Schmieröl als Fluid gefüllten Zylinders ein Druck auf, der quadratisch zur Drehzahl ansteigt, bis die Rückhaltekraft der Tellerfedern 29 überschritten und damit das Lamellenpaket 25,26 zusammengepreßt wird. Das von der Turbine abgegebene Drehmoment wird so über die Zahnräder 11,12,13,14 auf die Kurbelwelle des Motors 10 übertragen. Das übertragbare Drehmoment ist abhängig von der Anzahl der Reibflächen, dem Reibwert der Lamellen und der Anpreßkraft des Kolbens, die als Variable abhängig von der Drehzahl der Turbine ist.

Das sich durch diese drei Werte ergebende übertragbare Drehmoment muß immer größer sein als das von der Turbine abgegebene Moment, wobei jedoch von der Motorseite kommende Drehmomentspitzen nicht zur Überlastung der Turbine führen dürfen. Das gilt in ganz besonderem Maße bei maximaler Turbinendrehzahl, wo das von der Kupplung zu übertragende Drehmoment seinen Maximalwert erreicht. Um auch in diesem Betriebspunkt das Verhältnis des von der Kupplung übertragbaren Drehmoments zu dem von der Turbine abgegebenen Drehmoment auf einen für das Gesamtaggregat, insbesondere aber für die Turbine unschädlichen Wert zu begrenzen, ist die Anpreßkraft des Kolbens 22 durch die vorgespannten Tellerfedern 29 begrenzt, die bei Erreichen der Vorspannkraft durch den Kolben 22 entsprechend ausweichen, bis der Kolben am Sprengring 30 zur Anlage kommt. Die jetzt herrschende Vorspannkraft kann nicht mehr überschritten werden, ein weiteres Ansteigen des Druckes in der Ringkammer 31 würde zum Durchrutschen der Lamellen 25,26 führen.

Zum Druckaufbau in der Ringkammer 31 ist, abgesehen von Leckverlusten, nur eine dem Volumen der Ringkammer entsprechende Ölmenge notwendig. Da aber ständig Öl zugeführt wird, sind zum Abführen des überschüssigen Öles Entlastungsbohrungen 40 vorgesehen, die die Ringkammer 31 mit dem Getriebeinnenraum 41 verbinden. Für einen einwandfreien Druckaufbau in der Ringkammer ist es erforderlich, die Entlastungsbohrungen von einem Ort mit möglichst geringer Umfangsgeschwindigkeit ausgehen zu lassen, d.h. im Bereich des kleinsten Durchmessers der Ringkammer 31.

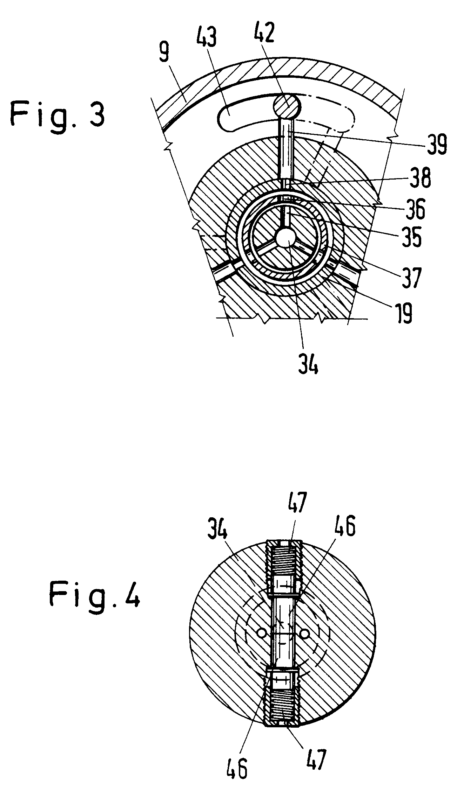

Achsparallel zur Rotationsachse der Reibungskupplung 3 sind Bolzen 42 druckdicht im Hohlradträger 19 befestigt, die in entsprechende Ausnehmungen im Ringkolben 22 ragen und diesen an einem unerwünschten Verdrehen relativ zum Zylinder 21 hindern. Im dargestellten Ausführungsbeispiel haben diese Ausnehmungen 43 die Form von sich konzentrisch zur Rotationsachse gekrümmt über einen Winkel ß erstreckenden Nuten (Fig. 3). Die Bolzen 42 liegen im Normalbetrieb, d.h. bei treibender Turbine 6, am - bezogen auf Fig. 3 - rechten Ende der Nuten 43 an. Wenn, aus welchen Gründen auch immer, die Drehzahl des Motors plötzlich so weit ansteigt, daß die Abtriebsseite der Kupplung 3, also der Ringkolben 22, schneller dreht als die Antriebsseite, also der Zylinder 21, und diese überholt, dann ist das nur bis zum Anschlag der Bolzen 42 am - wieder bezogen auf Fig.3 - linken Ende der Nuten 43 möglich (gestrichelte Kontur in Fig. 3). In dieser Stellung ist die Ölzufuhr zur Ringkammer 31 zwischen den Bohrungen 38 im Zylinder 21 und dem Schlitz 39 im Ringkolben 22 unterbrochen mit der Folge, daß die Kupplung wegen ihrer Leckverluste öffnet und die Verbindung zwischen Turbine 6 und Motor 10 unterbricht.

Um zu vermeiden, daß bei der Relativverdrehung des Ringkolbens der Wechsel von der einen in die andere Endlage schlagartig erfolgt, sind die Nuten 43 zur Ringkammer 31 hin abgedeckt. Dies kann mit je einer Scheibe 44 vor jeder Nut erfolgen oder mit einer einzigen ringförmigen, alle Nuten 43 abdeckenden Scheibe. Dabei werden die Scheiben 44 bzw. wird die Scheibe mit Federn 45 gegen den Ringkolben gedrückt, so daß das in den Nuten 43 befindliche Öl gewissermaßen von den Bolzen 42 gegen die angefederten Scheiben herausgequetscht werden muß, womit der erwünschte Dämpfungseffekt erzielt wird.

Die Federn 45 sind in ihrer Anstellkraft so abgestimmt, daß sie nicht nur die Scheiben 44 gegen den Ringkolben 22 drücken, sondern darüber hinaus über den Ringkolben 22 die Lamellen 25,26 auch bei geöffneter Kupplung zur gegenseitigen Anlage bringen. Die Kupplung hat dabei aber immer noch so viel Schlupf, daß die Relativverdrehung des Ringkolbens nicht behindert ist. Die Federn 45 üben also nur eine sog. Initialkraft aus zum Erleichtern des Einkuppelvorganges.

Um die Turbine im unteren Drehzahlbereich des Motors vom Motor abzukuppeln, insbesondere bei einer plötzlichen Drehzahlverringerung, ist für solche Fälle eine Unterbrechung der Ölzufuhr zur Kupplung vorgesehen. In der Welle 20 sind einander gegenüberliegend zwei Kolben 46 in einer radialen Durchgangsbohrung angeordnet, deren Stirnseiten unter dem Druck von Federn 47 (Fig. 4) aneinander anliegen und, da der Durchmesser der Kolben 46 größer ist als der der Bohrung 34, die Bohrung 34 verschließen. Dabei ragt jeder Kolben 46 bis zur Rotationsachse der Welle 20 in die Bohrung 34 hinein. Erst bei zunehmender Drehzahl der Welle 20 werden die Kolben 46 unter dem Einfluß der Fliehkraft gegen die Wirkung der Federn 47 radial nach außen gedrückt und geben so die Bohrung 34 bzw. den Öldurchfluß frei. Mit den stirnseitig anliegenden Kolben 46 ist eine 100%ige Abdichtung nicht gewährleistet. Um zu verhindern, daß das durch den Spalt durchtretende Öl in der Ringkammer 31 einen zum Einkuppeln ausreichenden Druck aufbaut, ist im Zylinder 21 eine zweite Entlastungsbohrung 48 vorgesehen, die die Ringkammer im Bereich ihres größten Durchmessers mit dem Getriebeinnenraum 41 verbindet und einen sehr kleinen Querschnitt besitzt, d.h. wesentlich kleiner als die Entlastungsbohrungen 40. Andernfalls könnte sich auch im Normalbetrieb kein Druck in der Ringkammer 31 aufbauen.

Bei der in Fig. 2 dargestellten Variante des Ausführungsbeispiels sind die Zahnräder 11,12 noch im Getriebegehäuse 1 untergebracht. Dabei ist das Zahnrad 12 drehbar auf einer Abtriebswelle 49 gelagert und über den Schwingungsdämpfer 4 mit der Abtriebswelle 49 verbunden. Am freien, aus dem Getriebegehäuse 1 herausragenden Ende der Abtriebswelle 49 ist das Zahnrad 13 aufgesetzt, das mit dem hier nicht dargestellten Zahnrad 14 kämmt. Es könnte statt des Zahnrades 13 auch ein Flansch aufgesetzt sein zum Anschluß an die Kurbelwelle 15 oder an ein zusätzliches Getriebe mit den Zahnrädern 13,14. Bei der Variante nach Fig. 1 ist der Schwingungsdämpfer 4 etwa in der Art wie das Zahnrad 11 in Fig. 2 auf der Welle 20 angeordnet. In beiden Fällen hat der Schwingungsdämpfer 4 die Aufgabe, vom Motor ausgehende Drehungleichförmigkeiten, die besonders im unteren Drehzahlbereich sehr hoch sein können, von der Kupplung und damit auch von der Turbine 6 weitestgehend fernzuhalten. Trotz seiner ggf. separaten Anordnung bildet der Schwingungsdämpfer 4 einen wesentlichen Bestandteil der Kupplung. Das gilt auch dann, wenn der Schwingungsdämpfer an einer anderen, hier nicht genannten Stelle zwischen der Kurbelwelle 15 des Motors 10 und der eigentlichen Kupplung 3 angeordnet ist.

Das durch die Entlastungsbohrungen 40,48 und an anderen Stellen in den Getriebeinnenraum 41 gelangende Öl kann durch eine Bohrung 50 im Getriebegehäuse 1 direkt oder über nicht dargestellte Leitungen zum Motor 10 zurückfließen.

**Patentansprüche**

1. Selbständig im Sinne des Einkuppelns schließende und im Sinne des Auskuppelns öffnende Reibungskupplung (3),

 – bei der in einer Rinskammer (31) eines mit einem treibenden Element (9) verbundenen Zylinders (21) ein Ringkolben (22) angeordnet ist, der die Reibkörper (24,25) unter dem Druck einer von einer externen Pumpe in den rotierenden Zylinder (21) geförderten Flüssigkeit segen die Kraft von Federn (29) im Sinne des Einkuppelns zusammendrückt,

 – und bei der der Ringkolben (22) über mindestens einen achsparallel zu ihm angeordneten Bolzen (42) gegen ungewolltes Drehen relativ zum Zylinder (21) gesichert ist,

gekennzeichnet durch ihre Anwendung in einem Zahnradgetriebe zur Leistungsübertragung von einer Abgas-Nutzturbine (6) auf die Kurbelwelle (15) eines Verbrennungsmotors (10), wobei zwei Einrichtungen vorgesehen sind zum Unterbrechen der Flüssigkeitszufuhr in die Ringkammer (31), die eine, wenn die drehzahl der Abtriebsseite plötzlich größer wird als die der Antriebsseite und die andere bei niedriger Drehzahl des motors (Leerlaufdrehzahl).

2. Reibungskupplung nach Anspruch 1, dadurch gekennzeichnet, daß das eine Ende des mindestens einen Bolzens (42) fest im Zylinder (21) aufgenommen ist, während sein anderes Ende in eine sich konzentrisch zur Rotationsachse des Kolbens gekrümmt erstreckende Nut (43) ragt, wobei der Kolben (22) zwischen einer ersten, die Fluidzufuhr in den Zylinder (21) zulassenden, und einer zweiten, die fluidzufuhr in den Zylinder (21) unterbrechenden Stellung um einen durch Anschlag des Bolzens an den Enden der gekrümmten Nut (43) begrenzten Weg (Winkel β) relativ zum Zylinder (21) verdrehbar ist.

3. Reibungskupplunp nach Anspruch 2, dadurch gekennzeichnet, daß die mindestens eine gekrümmte Nut (43) zur Ringkammer (31) hin mittels einer federnd am Ringkolben (22) anliegenden Scheibe (44) od. dgl. abgedeckt ist.

4. Reibungskupplung nach Anspruch 1, gekennzeichnet durch zwei in einer eine konzentrische Bohrung (34) für die Fluidzufuhr zum Zylinder (21) aufweisenden Welle (20) radial angeordnete Kolben (46), deren Durchmesser mindestens so groß ist wie der Durchmesser der besagten Bohrung, und deren einander zugewendete Enden bei niedriger Drehzahl des Motors unter gegenseitiger federbelasteter Anlage ihrer Stirnflächen die besagte Bohrung (34) je zur Hälfte verschließen und die bei zunehmender Drehzahl des Motors unter Fliehkrafteinwirkung gegen die Federkraft den Öldurchfluß freigeben.

5. Reibungskupplung nach Anspruch 1, dadurch gekennzeichnet, daß das Schmieröl des Motors (10) als Fluid für die Kupplungsbetätigung dient.

6. Reibungskupplung nach Anspruch 1, dadurch gekennzeichnet, daß die Ringkammer (31) über mindestens eine von einem Ort mit der zumindest annähernd geringsten Umfangsgeschwindigkeit ausgehende Entlastungsbohrung (40) im Zylinder (21) mit der Umgebung der Reibungskupplung (3) verbunden ist.

7. Reibungskupplung nach Anspruch 6, bei der die Ringkammer (31) über mindestens eine von einem Ort mit der zumindest annähernd größten Umfangsgeschwindipkeit aussehenden Entlastungsbohrunp (48) mit der Umgebung der Reibungskupplung (3) verbunden ist, dadurch gekennzeichnet, daß diese mindestens eine Entlastungsbohrung (48) gegenüber der mindestens einen anderen Entlastungsbohrung (40) einen wesentlich geringeren Querschnitt hat.

8. Reibungskupplung nach Anspruch 1, dadurch gekennzeichnet, daß die Reibkörper (25,26) auch bei geöffneter Kupplung (3) unter geringem Druck mit ihren Reibflächen aneinander anliegen.

9. Reibungskupplung nach Anspruch 8 in Verbindung mit Anspruch 3, dadurch gekennzeichnet, daß die die mindestens eine Scheibe (44) gegen den Ringkolben (22) drückende Feder (45) bzw. drückenden Federn (45) das Anliegen der Reibflächen bewirken.

10. Reibunpskupplung nach Anspruch 1, dadurch gekennzeichnet, daß der vom Kolben (22) beim Einkuppeln zurückzulegende Weg zum Zwecke einer Drehmomentbegrenzung durch einen Anschlag (30) begrenzt ist.

11. Reibungskupplung nach mindestens einem der vorstehenden Ansprüche, dadurch gekennzeichnet, daß ein Dämpfungsglied (4) vorgesehen ist für ihren weitgehenden Schutz vor vom Motor (10) ausgehenden Schwingungen.

12. Reibungskupplung nach Anspruch 11, dadurch gekennzeichnet, daß das Dämpfungsglied (4) zwischen ihr und der Kurbelwelle (15) des Motors (10) angeordnet ist.

**Claims**

1. A friction clutch (3) automatically closing in the direction of engagement and automatically opening in

EP 0 361 030 B1

the direction of disengagement,

— in which an annular piston (22) is arranged in an annular chamber (31) of a cylinder (21) connected with a driving element (22), which piston compresses the friction elements (24, 25) under the pressure of a fluid conveyed by an external pump into the rotating cylinder (21) against the action of springs (29) in the direction of engagement,

— and in which the annular piston (22) is secured against unintentional rotation relative to the cylinder (22) by means of at least one pin (42) arranged axially parallel to said annular piston,

characterised by the application of said clutch in a gear transmission for the transmission of power from an exhaust gas-driven turbine (6) to the crankshaft (15) of an internal combustion engine (10), two devices being provided for interrupting the supply of fluid into the annular chamber (31), the first device acting when the rotational speed of the output side suddenly becomes greater than that of the driving side and the second device acting in the case of a low rotational side of the engine (idling speed).

2. A friction clutch according to claim 1, characterised in that one end of the at least one pin (42) is securely accommodated in the cylinder (21), whilst its other end projects into a curved groove (43) extending concentric to the axis of rotation of the piston, the piston (22) being rotatable relative to the cylinder (21) through a distance (angle β) limited by the abutment of the pin against the ends of the curved groove (43) between a first position allowing for the supply of fluid into the cylinder (21) and a second position interrupting the supply of fluid into the cylinder (21).

3. A friction clutch according to claim 2, characterised in that the at least one curved groove (43) is covered relative to the annular chamber (31) by means of a disc (44) or the like resting resiliently against the annular chamber (22).

4. A friction clutch according to claim 1, characterised by two pistons (46) arranged radially in a shaft (20) comprising a concentric bore (34) for the supply of fluid to the cylinder (21), the diameter of said pistons being at least as large as the diameter of the said bore, and the ends of the pistons facing one another each closing one half of the bore (34) at a low rotational speed of the engine with the reciprocal spring-loading abutment of their end faces and as the rotational speed of the engine increases releasing the oil flow as a result of centrifugal force acting against the spring force.

5. A friction clutch according to claim 1, characterised in that the lubricating oil of the engine (10) acts as a fluid for actuating the clutch.

6. A friction clutch according to claim 1, characterised in that the annular chamber (31) is connected with the area surrounding the friction clutch (3) via at least one relief bore (40) in the cylinder (21) extending from a site having the at least approximately lowest circumferential velocity.

7. A friction clutch according to claim 6, in which the annular chamber (31) is connected with the area surrounding the friction clutch (3) via at least one relief bore (48) extending from the site having the at least approximately highest circumferential velocity, characterised in that said at least one relief bore (48) has a cross section which is considerably smaller than the at least one other relief bore (40).

8. A friction clutch according to claim 1, characterised in that the friction elements (25, 26) rest with their friction surfaces against one another with reduced pressure even when the clutch is open.

9. A friction clutch according to claim 8 in combination with claim 3, characterised in that the spring or springs (45) pressing the at least one disc (44) against the annular piston (22) cause(s) the friction surfaces to rest against one another.

10. A friction clutch according to claim 1, characterised in that the distance travelled by the piston (22) during the coupling procedure is limited by an abutment (30) in order to restrict torque.

11. A friction clutch according to at least one of the preceding claims, characterised in that a damping member (4) is provided for the extensive protection of the clutch against vibrations generated by the engine (10).

12. A friction clutch according to claim 11, characterised in that the damping member (4) is arranged between the clutch and the crankshaft (15) of the engine (10).

## Revendications

1. Embrayage à friction (3) se fermant automatiquement pour l'embrayage et s'ouvrant automatiquement pour le débrayage,

— dans lequel un piston annulaire (22) est disposé dans une chambre annulaire (31) d'un cylindre (21) relié à un élément d'entraînement (9), piston annulaire (22) qui comprime les corps frottants (24, 25) sous l'action de la pression d'un liquide refoulé par une pompe externe dans le cylindre tournant (21) et contre l'action de ressorts (29) pour l'embrayage,

— et dans lequel le piston annulaire (22) est protégé contre une rotation intempestive par rapport au cylindre

6

(21) par au moins un goujon (42) disposé parallèle à son axe,
embrayage à friction caractérisé en ce qu'il est mis en oeuvre dans une transmission par engrenage pour transmettre la puissance d'une turbine (6) de récupération des gaz d'échappement à l'arbre de vilebrequin (15) d'un moteur à combustion interne (10), embrayage à friction dans lequel il est prévu deux dispositifs pour interrompre l'arrivée du liquide dans la chambre annulaire (31), l'un de ces dispositifs agissant lorsque la vitesse de rotation du côté sortie devient subitement supérieure à celle du côté entraînement, tandis que l'autre dispositif intervient pour une basse vitesse de rotation du moteur (vitesse de ralenti).

2. Embrayage à friction selon la revendication 1, caractérisé en ce qu'une extrémité d'au moins un goujon (42) est fermement saisie dans le cylindre (21), tandis que son autre extrémité pénètre dans une gorge (43) s'étendant selon une courbe concentrique à l'axe de rotation du piston, tandis que ce piston (22) est susceptible de tourner par rapport au cylindre (21) entre une première position permettant l'arrivée du fluide dans le cylindre (21) et une seconde position interrompant l'arrivée du fluide dans le cylindre (21) en accomplissant une course (angle β) limitée par l'arrivée en butée du goujon contre les extrémités de la gorge curviligne (43).

3. Embrayage à friction selon la revendication 2, caractérisé en ce que la ou les gorges curvilignes (43) est recouverte ou bien sont recouvertes vers la chambre annulaire (31) par un disque (44) ou analogue s'appliquant élastiquement contre le piston annulaire (22).

4. Embrayage à friction selon la revendication 1, caractérisé en ce qu'il comporte deux pistons (46) disposés radialement dans un arbre (20) comportant un perçage concentrique (34) pour amener le fluide au cylindre (21), pistons dont le diamètre est au moins aussi grand que le diamètre du perçage précité et dont les extrémités tournées l'une vers l'autre ferment chacune pour moitié le perçage précité (34) pour une basse vitesse de rotation du moteur, du fait de l'application, sous la sollicitation de ressorts, de leurs faces frontales l'une contre l'autre, tandis que lorsque la vitesse du moteur croît, on libère le passage de l'huile contre l'action des ressorts sous l'effet de la force centrifuge.

5. Embrayage à friction selon la revendication 1, caractérisé en ce que l'huile de lubrification du moteur (10) est utilisée comme fluide pour l'actionnement de l'embrayage.

6. Embrayage à friction selon la revendication 1, caractérisé en ce que la chambre annulaire (31) est reliée à l'environnement de l'embrayage à friction (3) par l'intermédiaire d'au moins un perçage de délestage (40) dans le cylindre (21) partant d'un endroit où la vitesse périphérique est au moins approximativement la plus réduite.

7. Embrayage à friction selon la revendication 6, dans lequel la chambre annulaire (31) est reliée à l'environnement de l'embrayage à friction (3) par l'intermédiaire d'au moins un perçage de délestage (48) partant d'un endroit où la vitesse périphérique est au moins approximativement la plus grande, embrayage caractérisé en ce que ce perçage de délestage ou ces perçages de délestage (48) a ou ont une section transversale essentiellement plus réduite que l'autre perçage de décharge ou les autres perçages de décharge (40).

8. Embrayage à friction selon la revendication 1, caractérisé en ce que les corps frottants (25, 26) s'appliquent l'un contre l'autre par leurs surfaces de frottement sous une pression réduite, même lorsque l'embrayage (3) est ouvert.

9. Embrayage à friction selon la revendication 8 en combinaison avec la revendication 3, caractérisé en ce que l'application des surfaces frottantes est assurée par le ressort (45) ou bien les ressorts (45) pressant le disque (44) ou bien les disques (44) contre le piston annulaire (22).

10. Embrayage à friction selon la revendication 1, caractérisé en ce que la course devant être parcourue par le piston (22) lors de l'embrayage est limitée par une butée (30) afin de limiter le couple.

11. Embrayage à friction selon au moins une des précédentes revendications, caractérisé en ce qu'il est prévu un organe d'amortissement (4) pour le protéger dans une large mesure des oscillations en provenance du moteur (10).

12. Embrayage à friction selon la revendication 11, caractérisé en ce que l'organe d'amortissement (4) est disposé entre l'embrayage et l'arbre de vilebrequin (15) du moteur (10).

# Fig.1

# Fig.2

Fig. 3

Fig. 4